Europäisches Patentamt

European Patent Office

Office européen des brevets

(19)

(11) Veröffentlichungsnummer: **0 091 714**
**B1**

(12) # EUROPÄISCHE PATENTSCHRIFT

(45) Veröffentlichungstag der Patentschrift:
**19.02.86**

(21) Anmeldenummer: **83200474.1**

(22) Anmeldetag: **05.04.83**

(51) Int. Cl.⁴: **B 26 D 7/01** // B23D33/12

(54) **Verfahren und Vorrichtung zur Herstellung druckfrischer, numerierter und auf Format geschnittener Wertscheine.**

(30) Priorität: **08.04.82 CH 2195/82**

(43) Veröffentlichungstag der Anmeldung:
**19.10.83 Patentblatt 83/42**

(45) Bekanntmachung des Hinweises auf die Patenterteilung:
**19.02.86 Patentblatt 86/8**

(84) Benannte Vertragsstaaten:
**CH DE FR GB IT LI**

(56) Entgegenhaltungen:
**DE - A - 2 757 186**
**FR - A - 2 265 652**
**US - A - 4 283 902**

(73) Patentinhaber: **DE LA RUE GIORI S.A., 4, rue de la Paix,
CH-1003 Lausanne (CH)**

(72) Erfinder: **Kühfuss, Runwalt, 25, rue des Crêtes,
CH-1018 Lausanne (CH)**

(74) Vertreter: **Jörchel, Dietrich R.A. et al, c/o BUGNION S.A.
Conseils en Propriété Industrielle 10, route de Florissant
Case postale 375, CH-1211 Genève 12 Champel (CH)**

## Beschreibung

Die Erfindung bezieht sich auf Verfahren gemäss dem Oberbegriff des Patentanspruchs 1 und auf eine Vorrichtung zur Durchführung des Verfahrens gemäss DE-A-2 757 186.

Bei der Fertigung von Wertscheinen, insbesondere von Banknoten, werden im allgemeinen zunächst Wertscheinbogen mit einer bestimmten Anzahl von Nutzen, das heisst mit einer bestimmten Anzahl von matrizenförmig angeordneten Wertscheindrucken, hergestellt, dann die Wertscheindrucke auf den Bogen in einer Numeriermaschine numeriert und schliesslich die Bogen stapelweise Schritt für Schritt in Streifenlagen und anschliessend die Streifenlagen in Wertscheinbündel zerschnitten, wobei die Einzelwertscheine der Bündel ihr fertiges Format erhalten. Beim Einsatz automatisch arbeitender Schneidmaschinen werden die Vorschublängen beim schrittweisen Vorschub der Bogenstapel und der Streifenlagen jeweils aufgrund eines einmal eingestellten Vorschubprogramms fest vorgegeben, und zwar in Abhängigkeit von der Wertscheingrösse bzw. dem gewünschten Wertscheinformat.

Bei späteren Kontrollen der Wertscheine, insbesondere bei Echtheitsprüfungen von im Umlauf befindlichen Banknoten, ist es wünschenswert oder sogar häufig vorgeschrieben, dass die Nummern der Wertscheine, also bei Banknoten die Serienummern, abgelesen und kontrolliert werden. In vielen Ländern werden zu diesem Zwecke umlaufende Banknoten, sobald sie bei einer Bank eingezahlt wurden, an die betreffende Zentralbank eingesandt, wo sie auf Echtheit und auf ihren Abnutzungsgrad geprüft werden. Diese Echtheitsprüfung schliesst in der Regel die Ablesung und Erfassung der Seriennummern ein. Im Mittel gelangt jede im Verkehr befindliche Banknote etwa fünf- bis sechsmal zur Kontrolle und Nummernablesung in die Zentralbank, bevor sie wegen zu starker Abnutzung aus dem Verkehr gezogen wird.

In zunehmenden Masse besteht heute das Bedürfnis, diese Nummernablesung automatisch mit geeigneten Nummernlesegeräten vorzunehmen, welche meistens optisch auf der Grundlage einer Ziffernerkennung arbeiten. Dazu ist es natürlich erforderlich, dass die Nummern in einer zur automatischen Ablesung geeigneten Form gedruckt werden. Es können auch nach anderen Methoden arbeitende automatische Lesegeräte, beispielsweise magnetische Nummernlesegeräte, verwendet werden, sofern nur die aufgedruckte Nummer bzw. die Nummernfarbe spezifische, vom Detektor des Lesegeräts erkennbare Eigenschaften aufweist.

Nun hängt eine einwandfreie und zuverlässige automatische Nummernablesung nicht nur davon ab, dass die Nummern eindeutig vom Nummernlesegerät erkannt werden, sondern auch von der exakten Ableseposition, welche die Nummer im Zeitpunkt der Ablesung relativ zum Nummernlesegerät bzw. beim Passieren des Nummernlesegeräts einnehmen muss, damit der gesamte Nummernbereich vollständig erfasst wird. Da hierbei im allgemeinen die zulässigen Toleranzen sehr eng sind, treten bisher Fehlablesungen bereits dann auf, wenn die Lage der Nummer beim Ablesen nur geringfügig, um beispielsweise nur einige Zehntelmillimeter, gegenüber der vorgeschriebenen Ableseposition verschoben oder versetzt ist. Im allgemeinen ist eine Toleranz von maximal 0,5 mm die äusserste, für eine zuverlässige automatische Ablesung noch akzeptierbare Grenze.

Die Wertscheinnummer erscheint im allgemeinen an mehreren Stellen des Wertscheins. Zur automatischen Ablesung wählt man zweckmässigerweise eine in Rand- oder Eckennähe aufgedruckte Nummer, wobei dann die benachbarte Wertscheinkante, die vorzugsweise parallel zur Leserichtung der Nummer verläuft und von der unteren Breitseitenkante gebildet wird, als Bezugskante verwendet wird, welche bei der Nummernablesung an einem Positionierungsanschlag anliegt. Gewöhnlich ist dieser Positionierungsanschlag horizontal orientiert und bildet eine Auflage für die abzulesenden, senkrecht stehenden Wertscheine, die sich mit ihrer Bezugskante auf dieser Auflage abstützen, während die Ablesung in horizontaler Richtung in einer Höhe erfolgt, die dem Abstand der Position der Nummer zur Bezugskante entspricht. Es ist nun gerade dieser, für eine korrekte Nummernablesung wichtige Abstand, der in der Praxis von Wertschein zu Wertschein, insbesondere von Banknote zu Banknote, mehr oder weniger variiert, wobei die auftretenden Toleranzen grösser als etwa 0,5 mm werden können.

Diese Änderungen der Nummernposition relativ zur Bezugskante rühren von den unvermeidlichen Toleranzen her, die mit den Unterschieden im Format der Wertscheinbogen, mit der Pressung und Dehnung des Papiers beim Druck und mit seinem Feuchtigkeitsgehalt, mit Ungenauigkeiten des Registers beim Nummernaufdruck und mit Ungenauigkeiten beim Zerschneiden der Bogenstapel und Streifenlagen zusammenhängen.

Die vorstehend erläuterten Effekte beeinträchtigen bisher eine zuverlässige automatische Nummernablesung, so dass sich eine solche Ablesung noch nicht allgemein durchsetzen konnte, obwohl ihre Vorteile gegenüber einer visuellen Ablesung durch entsprechend geschultes Personal auf der Hand liegen.

Der Erfindung liegt die Aufgabe zugrunde, die Herstellung von numerierten und auf Format geschnittenen Wertscheinen so zu gestalten, dass die für eine automatische Ablesung bestimmte Nummer trotz der vorstehend beschriebenen Toleranzen stets eine hinreichend genaue Position relativ zur Bezugskante des Wertscheins hat.

Diese Aufgabe wird erfindungsgemäss durch die im kennzeichnenden Teil des Patentanspruchs 1 sowie, hinsichtlich der Vorrichtung zur Durchführung des erfindungsgemässen Verfahrens, durch die im Patentanspruch 7 angegebenen Merkmale gelöst.

Dadurch wird bei jedem Wertschein ein gleichbleibender Abstand zwischen Position der Nummer und Bezugskante garantiert, weil das die Schnittmarke druckende Klischee am Numerierwerkzylinder im vorbestimmten Abstand zum betreffenden Numerierwerk befestigt und vorzugsweise am Numerierwerk selber oder, wenn der Abstand grösser ist, am Numerierwerkträger angeordnet ist.

Am einfachsten lässt sich die Steuerung des Vorschubs beim Streifenschnitt durchführen, indem ein parallel zur Vorschubrichtung der Bogenstapel beim Streifenschnitt orientierter Seitenrand der Bogen, welcher bei einem späteren Randbeschnitt abgeschnitten wird, während der Numerierung mit den Schnittmarken versehen wird. In diesem Fall definiert jeweils eine Schnittmarke die Bezugskanten aller in einer Wertscheinreihe liegenden Wertscheine, das heisst also je eine Schnittlinie beim Streifenschnitt.

Wenn beim Zerschneiden der Bogenstapel mit Zwischenschnitten gearbeitet wird, können die Schnittmarken natürlich auch auf den späteren Abfallstreifen zwischen benachbarten Wertscheinreihen aufgebracht werden. Das Zerschneiden unter Verwendung von Zwischenschnitten garantiert, dass alle anfallenden Wertscheine dasselbe vorbestimmte Format haben, da lediglich die eventuell variierenden Breiten der Abfall- bzw. Zwischenstreifen durch die Schnittmarken gesteuert werden, die Breite der Streifenlagen selber jedoch durch fest programmierte konstante Vorschubschritte bestimmt ist.

Im Prinzip lässt sich die Vorschubsteuerung nach der Erfindung auch bei den Bündelschnitten anwenden. Da jedoch kein parallel zur Vorschubrichtung orientierter, später noch abgeschnittener Rand für die Schnittmarken zur Verfügung steht und auf dem Wertschein aufgedruckte zusätzliche Markierungen, wie sie die Schnittmarken darstellen, in der Regel nicht zulässig sind, muss beim Bündelschnitt mit Zwischenschnitten gearbeitet werden, um die Schnittmarken auf die Abfallstreifen aufbringen zu können.

Zweckmässige Ausgestaltungen der Erfindung sind in den abhängigen Patentansprüchen angegeben.

Die Erfindung wird anhand der Zeichnungen an Beispielen näher erläutert. Es zeigen:

Fig. 1 eine schematische Ansicht eines sich auf einem Positionieranschlag abstützenden Wertscheins mit der automatisch abzulesenden Nummer,

Fig. 2 die schematische Ansicht der wesentlichen Verarbeitungsstationen bei der Fertigung von Wertscheinen gemäss der vorliegenden Erfindung,

Fig. 3 die schematische Ansicht eines bedruckten Wertscheinbogens, welcher $6 \times 4 = 24$ Wertscheindrucke bzw. Einzelnutzen aufweist und auf welchem die durch Schnittmarken markierten späteren Streifenschnittlinien sowie die Bündelschnittlinien gestrichelt dargestellt sind,

Fig. 4 als zweites Beispiel einen $4 \times 4 = 16$ Wertscheindrucke aufweisenden Bogen, welcher mit Zwischenschnitten verarbeitet wird, wobei wiederum die späteren Schnittlinien gestrichelt dargestellt und die die Zwischen- bzw. Abfallschnittlinien beim Streifenschnitt definierenden Schnittmarken angegeben sind, und

Fig. 5 als drittes Beispiel die Veranschaulichung einer Vorschubsteuerung beim Bündelschnitt im Falle von vier Streifenlagen, die zu einem mit Zwischenschnitten verarbeiteten Bogen $4 \times 4$ Wertscheindrucken, wie im Beispiel nach Fig. 5, gehören und schematisch mit dem das Bündelschneidwerk nach Fig. 2 einschliessenden Bereich zusammen mit den zugeordneten Vorschubeinrichtungen und Lesegeräten dargestellt sind.

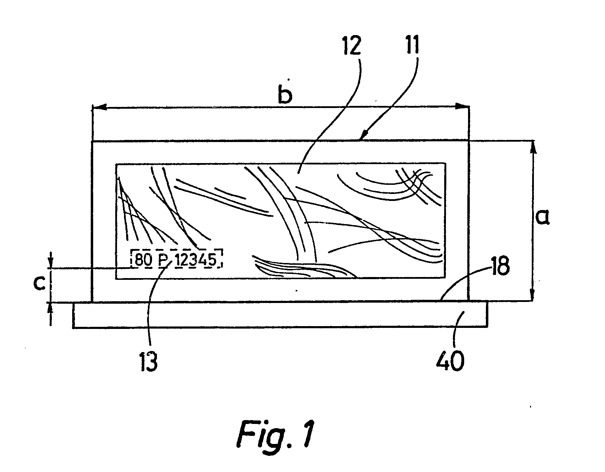

Fig. 1 zeigt schematisch einen auf Format geschnittenen, die Abmessungen $a \times b$ aufweisenden Wertschein 11 mit dem von einer unbedruckten hellen Umrandung umgebenen Druckbild 12, welches in einer unteren Ecke eine Nummer 13 aufweist, bei der es sich im Falle einer Banknote um die Seriennummer handelt. Diese parallel zur unteren Breitseitenkante des Wertscheins 11 aufgedruckte Nummer 13 ist dazu bestimmt, zwecks Kontrolle und Echtheitsprüfung von einem automatischen Nummernlesegerät abgelesen zu werden. In der Ableseposition liegt die untere Kante des Wertscheins 11 als Bezugskante 18 an einem Positionierungsanschlag 40 an. Zweckmässigerweise liegt dieser Positionierungsanschlag 40 mit seiner Anlagefläche waagerecht und bildet eine Auflage, auf der sich der senkrecht orientierte Wertschein 11 mit seiner Bezugskante 18 abstützt. In der Ableseposition hat die abzulesende Nummer 13 vom Positionierungsanschlag 40, das heisst also von der Bezugskante 18, den Abstand c. Damit bei allen Wertscheinen die Nummer vollständig vom Nummernlesegerät erfasst wird, muss dieser Abstand c in sehr engen Grenzen stets konstant sein, was jedoch, aus den in der Einleitung erläuterten Gründen, bisher keineswegs der Fall ist.

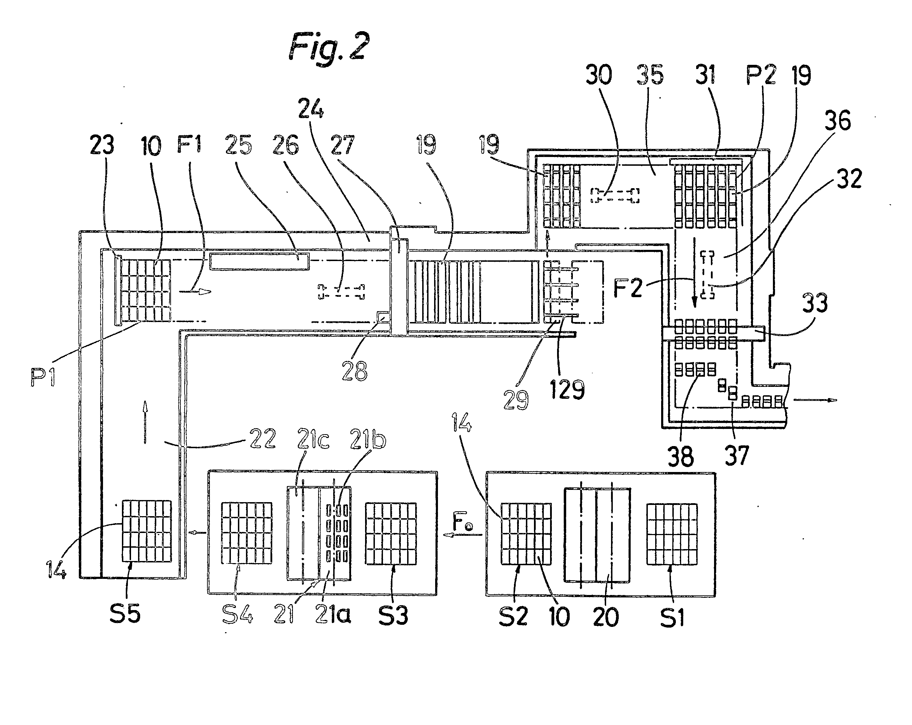

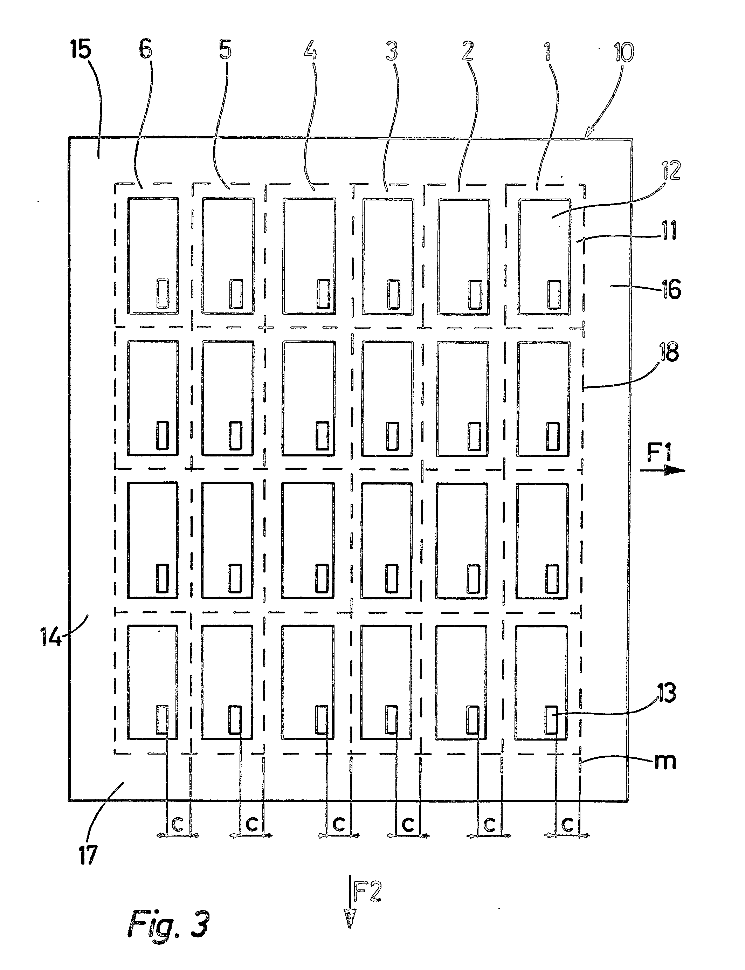

Fig. 2 zeigt schematisch diejenigen Verarbeitungsstationen, die Verfahrensschritte nach der Erfindung einschliessen. Es wird angenommen, dass die Wertscheinbogen bereits beidseitig im Offsetdruck und ausserdem auf der einen Seite im Stahlstichdruck bedruckt worden sind. Der letzte Druckvorgang für die so vorbereiteten Wertscheinbogen besteht darin, dass auch noch die andere Bogenseite mit einem Stickdruckbild bedruckt wird. Das dafür vorgesehene Stichdruckwerk 20 ist schematisch in Fig. 2 angedeutet. Die Wertscheinbogen, die am Eingang des Stichdruckwerks 20 in Form eines Eingangsstapels S1 bereitliegen, durchlaufen in bekannter Weise einzeln nacheinander das Stichdruckwerk 20 und werden an dessen Ausgang auf einem Ausgangsstapel S2 gesammelt. Wie angedeutet, haben die einzelnen, fertig bedruckten Bogen 10 je 24 Wertscheindrucke bzw. sogenannte Einzelnutzen, die matrizenförmig in sechs Reihen mit je vier Wertscheindrucken angeordnet sind. In Fig. 3 ist vergrössert ein derartiger Bogen 10 mit seinen sechs Wertscheinreihen 1 bis 6 dargestellt, welche jeweils vier Wertscheine 11 mit ihrem Wertscheindruck 12 und der Nummer 13 aufweisen.

Bekanntlich werden die einzelnen Bogen beim Durchlaufen der Druckwerke von Bogengreifern gezogen, die den vorderen Bogenrand halten. Dieser beim Durchlaufen der Druckwerke in Transportrichtung $F_0$ vornliegende Bogenrand ist der sogenannte Greiferrand 14 (Fig. 2 und 3), und die Wertscheinreihen 1 bis 6 sind parallel zu diesem Greiferrand 14, also quer zur Richtung des Durchlaufs der Bogen durch die Druckwerke, orientiert. Die übrigen drei Bogenränder sind mit 15, 16 und 17 bezeichnet.

Die fertig bedruckten Bogen 10 des Stapels S2 werden gewöhnlich einer visuellen Qualitätskontrolle unterworfen, bei welcher Bogen mit Fehldrucken ausgesondert werden. Danach werden die Bogen 10 zwecks Numerierung der Einzelnutzen von einem Eingangsstapel S3 in eine Numeriermaschine 21 eingegeben, welche in bekannter Weise einen Numerierwerkzylinder 21a mit einer entsprechenden Anzahl Numerierwerken 21b und einen mit diesen zusammenwirkenden Druckzylinder 21c aufweist. Die numerierten Bogen werden am Ausgang auf einem Ausgangsstapel S4 abgelegt. Diejenigen Numerierwerke 21b, welche die später abzulesenden Nummern 13 auf den dem Bogenrand 17 (Fig. 3) benachbarten Wertscheinen drucken, sind mit Klischees versehen, welche gleichzeitig strichförmige Schnittmarken m (Fig. 3) im vorbestimmten Abstand zu den Ziffernrollen aufdrucken. Wenn dieser Abstand grösser ist, werden die Klischees an den Numerierwerkträgern befestigt. Diese Schnittmarken m definieren die späteren Schnittlinien beim Streifenschnitt. Dadurch bleibt der kritische Abstand c stets konstant, unabhängig davon, welche Toleranzen die Nummernposition relativ zum Druckbild und zum Bogenrand einnimmt.

Anschliessend werden die numerierten Bogen stapelweise nacheinander einer automatischen Schneidmaschine zugeführt. Dazu wird nach Fig. 2 ein Bogenstapel S5 zunächst in Richtung des Pfeils längs einer Transportstrecke 22 zum Eingang einer Schneidstrecke 24 transportiert und in eine definierte Anfangsposition P1 gebracht, in welcher alle Bogen 10 des Stapels mit ihren Greiferrändern 14 an einem Anschlag 23 ausgerichtet sind. Beim folgenden Transport des Stapels längs der Schneidstrecke 24 in Richtung des Peils F1 zum Streifenschneidwerk 27 und während des schrittweisen Vorschubs innerhalb dieses Streifenschneidwerks 27 bilden die Greiferränder 14 die Bogenhinterkanten und damit die für den Streifenschnitt massgebende Bezugskante des Bogenstapels, an welcher in bekannter Weise fingerartige Schieber einer automatischen Vorschubvorrichtung 26 anliegen, um die Stapel vorzuschieben.

An der Schneidstrecke 24 befindet sich vor dem Streifenschneidwerk 27 seitlich ein Längsschneidwerk 25, an dem die Stapel gestoppt werden und in welchem ein Seitenrandabschnitt stattfindet. Es wird hier nur derjenige Bogenrand 15 beschnitten, welcher keine Schnittmarken trägt und beim späteren Bündelschnitt den rückwärtigen Rand der Streifenlagen bildet. Danach erfolgt in dem als Querschneidwerk ausgebildeten Streifenschneidwerk 27 zunächst an der Vorderseite des Stapels der Randbeschnitt des vorderen Randes 16 der Bogen 10 (Fig. 3), dann wird der Stapel schrittweise vorgeschoben und durch je einen Schnitt in seine sechs Streifenlagen 19 zerteilt, welche den sechs Wertscheinreihen 1 bis 6 entsprechen, und schliesslich wird auf der Rückseite der letzten Streifenlage der hintere Randbeschnitt des Greiferrandes 14 ausgeführt. Der Papierabfall bei den Randbeschnitten fällt durch eine Abfallklappe. Wenn ein Stapel zerteilt ist, wird automatisch der folgende Stapel zugeführt.

Während in bekannten automatischen Schneidmaschinen die Längen der erwähnten Vorschübe als konstant bleibende Werte fest eingestellt bzw. elektronisch vorprogrammiert sind und daher stets Streifenlagen der konstanten Breite a (Fig. 1) erzeugt werden, erfolgt erfindungsgemäss die Vorschubsteuerung durch ein Lesegerät 28 (Fig. 2) als Funktion der auf dem Bogenrand 17 abgelesenen Schnittmarken m. Diese Schnittmarken m werden unmittelbar vor dem Einlauf der Bogenstapel in das Streifenschneidwerk 27 vom Lesegerät 28 abgelesen, welches die Stillsetzung der Bogenstapel in der vorgesehenen Schnittstellung bewirkt.

Der Abstand des Lesegeräts 28 vom Messer des Streifenschneidwerks 27 und die Positionen der Schnittmarken m relativ zu den ihnen zugeordneten Schnittlinien sind so gewählt, dass, nachdem die Vorschubvorrichtung 26 beim Ansprechen des Lesegeräts 28 abgeschaltet wurde, sich ein Bogenstapel aufgrund seiner Trägheit und der Trägheit des Vorschubmechanismus gerade noch in die gewünschte Schnittstellung bewegt und dort zum Stillstand kommt. Dieser Bremsweg oder Auslaufweg eines Stapels ist eine definierte und für gleiche Stapel exakt reproduzierbare Grösse.

Die Schnittmarken m definieren alle im Streifenschneidwerk ausgeführten Schnitte mit Ausnahme des letzten Schnitts, durch den der hintenliegende Greiferrand 14 abgeschnitten wird; der betreffende letzte Vorschubschritt ist daher fest eingestellt.

Die einfach zu realisierenden, aufzudruckenden Schnittmarken m und deren automatische Ablesung durch ein die Vorschubvorrichtung 26 steuerndes Lesegerät 28 erlauben daher eine ständige exakte Steuerung der Vorschublängen beim Streifenschnitt derart, dass der in Fig. 3 eingezeichnete, für eine spätere automatische Nummernablesung kritische Abstand c konstant bleibt. Dabei wird in Kauf genommen, dass die Breite der Streifenlagen 19 bzw. der fertig geschnittenen Wertscheine 11 eventuell ein wenig vom eigentlich gewünschten Wert a abweicht und von Streifenlage zu Streifenlage geringfügig variiert. Solche Schwankungen, die in Fig. 3 übertrieben dargestellt sind, fallen praktisch nicht auf. Auf jeden Fall ist der erzielte Vorteil wesentlich grösser als der eventuelle Nachteil geringfügig unterschiedlicher Wertscheinbreiten.

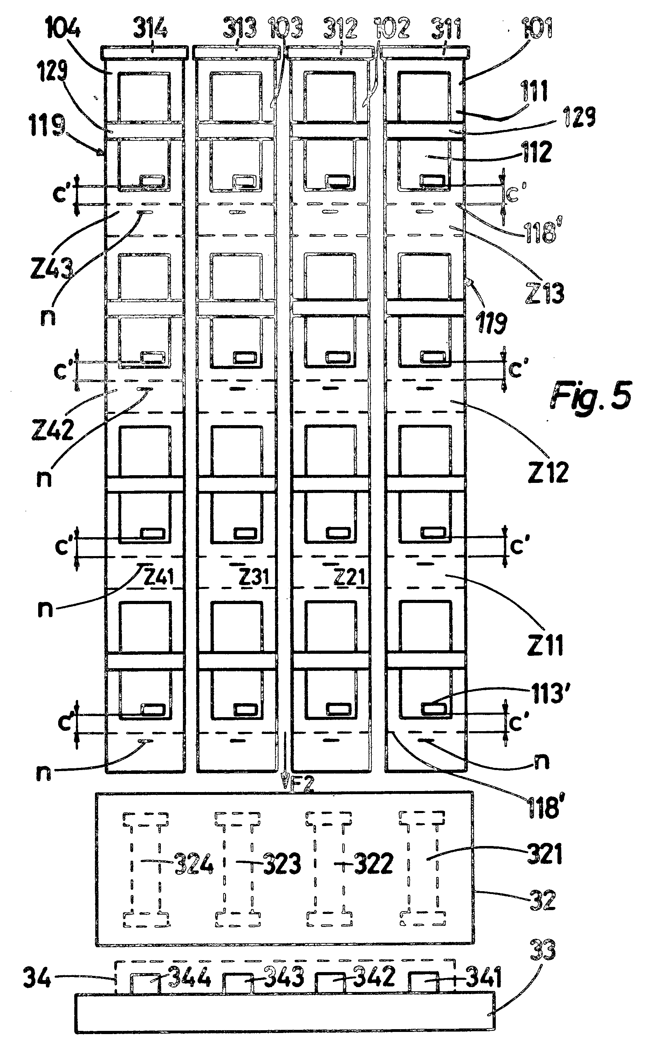

Die Weiterverarbeitung der Streifenlagen 19, die beim betrachteten Beispiel nach Fig. 3 nicht mehr zur vorliegenden Erfindung gehört, soll im Hinblick auf das Beispiel nach Fig. 5 hier kurz beschrieben werden.

Hinter dem Streifenschneidwerk 27 befindet sich eine Banderolierstation 29 mit einer der Nutzenzahl je Streifen entsprechenden Anzahl von einzelnen Banderoliereinrichtungen, im betrachteten Beispiel also vier Banderoliereinrichtungen, die bei jedem Arbeitsgang gleichzeitig betrieben werden, derart, dass jede Streifenlage 19 gleichzeitig an den vier Wertschein- bzw. Nutzenpositionen mit je einer vorgeleimten Banderole 129 umgeben wird.

Die fertig banderolierten Streifenlagen 19 werden zunächst im Sinne des Pfeils in Streifenlängsrichtung von der Banderolierstation 29 entfernt und dann längs der Transportstrecke 35, quer zur Streifenlängsrichtung, mittels einer Vorschubvorrichtung 30 zum Eingang der Schneidstrecke 36 bewegt, auf der ein als Querschneidwerk ausgebildetes, automatisches Bündelschneidwerk 33 installiert ist. Am Eingang dieser Schneidstrecke 36 werden jeweils alle zu ein und demselben Bogenstapel S5 gehörenden sechs Streifenlagen 19 in einer definierten Anfangsposition P2 gesammelt, in welcher die im Längsschneidwerk 25 beschnittenen Kanten durch Anlage an einem Schieber 31 ausgerichtet sind, welcher zur Vorschubvorrichtung 32 gehört. Alle sechs Streifenlagen 19, die, wie in Fig. 2 angedeutet, mit geringem Abstand nebeneinander angeordnet sind, werden dann mittels der Vorschubvorrichtung 32 im Sinne des Pfeils F2 gemeinsam zum Bündelschneidwerk 33 bewegt, wobei sie in Nuten geführt werden. Im Bündelschneidwerk 33 wird zunächst der dem Bogenseitenrand 17 (Fig. 3) entsprechende Vorderrand aller sechs Streifenlagen 19 beschnitten, und dann werden alle sechs Streifenlagen 19 unter schrittweisem Vorschub gleichzeitig durch drei aufeinanderfolgende Schnitte in einzelne Wertscheinbündel 38 zerschnitten, die bereits banderoliert sind und in denen die Wertscheine ihr fertiges Format haben.

Eine Steuerung der Vorschübe lässt sich mit handelsüblichen Vorschubeinrichtungen, die unter dem Namen Linearverstärker bekannt sind, besonders genau und einfach durchführen. Diese Linearverstärker haben ein hydraulisches Zylinder-Kolben-System, wobei die dosierte Druckmittelspeisung des hydraulischen Zylinders mit Hilfe eines Schrittmotors erfolgt, der bei jeder Umdrehung das Druckmittel-Einlassventil kurzzeitig öffnet; dadurch wird bei einer Umdrehung des Schrittmotors eine genau dosierte, kleine Druckmittelmenge derart dem Zylinder zugeführt, dass der Kolben einen Vorschub von beispielsweise 0,1 mm ausführt. Ein derartiger hydraulisch gesteuerter Vorschub arbeitet auch mit hinreichend geringer Ansprechzeit.

Die vorstehend erläuterte Verarbeitung von Wertscheinbogen zu banderolierten Wertscheinbündeln sowie die dazu verwendeten Schneid- und Banderoliermaschinen sind bekannt und beispielsweise in der schweizerischen Patentschrift CH 612 639 bzw. der amerikanischen Patentschrift US 4 283 902 der gleichen Anmelderin beschrieben, ebenso auch in der älteren deutschen Patentschrift DE 3 238 994 (veröffentlicht am 5.5.83) der gleichen Anmelderin.

Die auf Format geschnittenen banderolierten Bündel 38 werden auf eine Transportstrecke 37 vorgeschoben und gelangen zu weiteren, hier nicht interessierenden Verarbeitungsstationen, in denen Bündelpakete mit fortlaufend numerierten Wertscheinen einer bestimmten Serie gebildet und dann diese Bündelpakete banderoliert und verpackt werden. Diese weitere Verarbeitung ist beispielsweise Gegenstand der schweizerischen Patentschrift CH 577 426 bzw. der amerikanischen Patentschriften US 3 939 621 und 4 045 944 der gleichen Anmelderin.

Das vorstehend beschriebene Beispiel betraf das Zerschneiden der Bogen durch Einzelschnitte, was zur Folge hat, dass wegen der eventuell unterschiedlichen Vorschubschritte die Breite der erzeugten Wertscheine nicht konstant ist, sondern in geringem Masse variiert. Dieses etwas unterschiedliche Wertscheinformat fällt jedoch im allgemeinen nicht ins Gewicht und ist in den meisten Fällen akzeptabel.

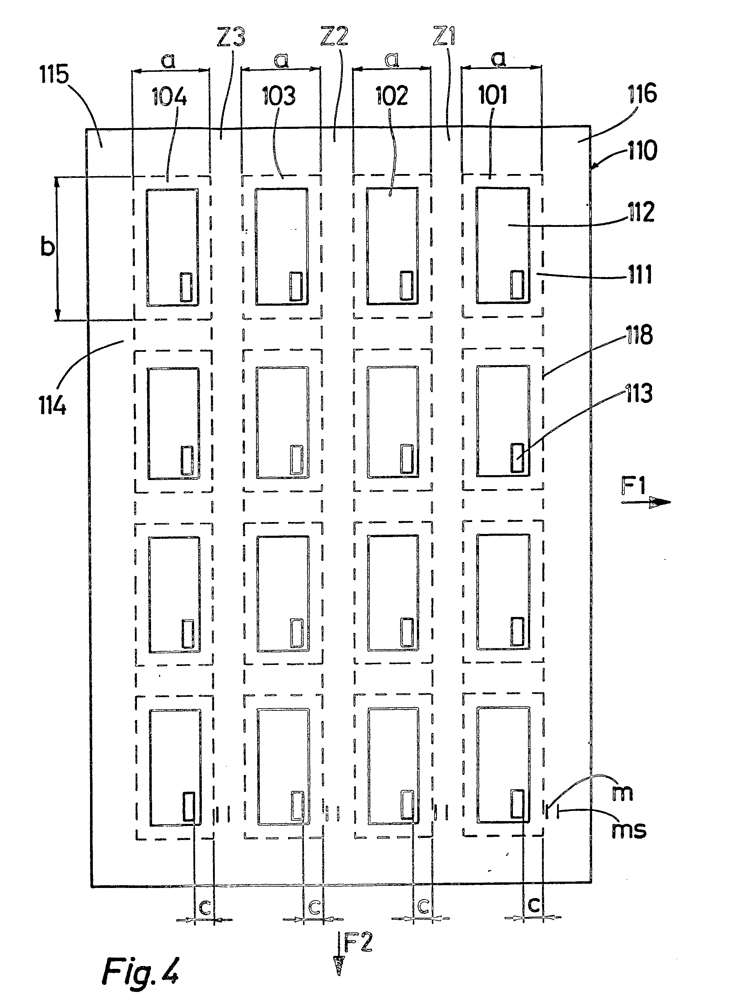

Jedoch lassen sich nach dem erfindungsgemässen Verfahren ohne weiteres auch Wertscheine konstanten Formats herstellen, wenn man in an sich bekannter Weise mit Zwischenschnitten arbeitet. Ein diesbezügliches Ausführungsbeispiel wird anhand der Fig. 4 erläutert. Fig. 4 zeigt einen Wertscheinbogen 110 mit 16 Wertscheinen 111, die in vier Wertscheinreihen 101 bis 104 mit je vier Einzelnutzen angeordnet sind und die Wertscheindrucke 112 mit den Nummern 113 aufweisen.

Die späteren Schnittlinien sind gestrichelt eingezeichnet, wobei die auf die Position der Nummern 113 bezogenen, den konstanten Abstand c erzeugenden Schnittlinien, welche die Bezugskanten 118 definieren, wiederum durch aufgedruckte Schnittmarken m bestimmt werden, die sich diesmal auf den Zwischenstreifen Z1, Z2 und Z3 befinden. In diesem Falle ist das Format aller Wertscheine 111 stets gleich gross und hat die Abmessungen a mal b. Dafür variieren eventuell die Breiten der zwischen benachbarten Wertscheinreihen 101 bis 104 liegenden Zwischenstreifen Z1, Z2 und Z3, welche als Abfallstreifen später abgeschnitten werden.

Mit einer in Fig. 2 dargestellten Vorrichtung wird, nachdem im Schneidwerk 25 der Seitenrand 115 beschnitten wurde, im Streifenschneidwerk 27 zunächst der Vorderrand 116 abgeschnitten, wobei der Vorschub in diese Schnittstellung durch Ablesung der ersten Druckmarkierung m durch das Lesegerät 28 gesteuert wird. Die Länge a des folgenden Vorschubschritts in die zum ersten Streifenschnitt erforderliche Schnittstellung ist fest vorprogrammiert. Der Vorschub in die folgende Schnittstellung, in welcher der Zwischenstreifen Z1 abgeschnitten wird, wird wiederum vom Lesegerät 28 durch Ablesung der zweiten Druckmarke m gesteuert. Hieran schliesst sich ein Vorschubschritt der Länge an und so fort.

Anstelle von einzelnen Schnittmarken können auch jeweils Doppelmarkierungen vorgesehen sein, die, wie in Fig. 4 angedeutet, aus zwei in geringem Abstand voneinanderliegenden strichförmigen Markierungen ms und m bestehen. Die Anordnung ist dann so getroffen, dass bei Ablesung der jeweils ersten Markierung ms die normale Vorschubgeschwindigkeit der Bogenstapel auf eine Schleichbewegung verringert und erst beim Ablesen der jeweils zweiten Markierung m die Vorschubvorrichtung 26 abgeschaltet wird. Die vorangehende Abbremsung der Bogenstapel vor ihrer Stillsetzung erhöht auf diese Weise die Einlaufgeschwindigkeit in die Schnittstellung und ist dann zweckmässig, wenn die Bogenstapel in üblicher Weise, wie beschrieben, mittels Schiebern vorgeschoben werden, die nur an der rückwärtigen Stapelkante, im betrachteten Beispiel am Greiferrand 114, anliegen.

Fig. 5 veranschaulicht die Vorschubsteuerung zur Erzielung definierter Bezugskanten beim Bündelschnitt im Falle eines Bogens gemäss Fig. 4, der mit Zwischenschnitten verarbeitet wird und bereits in seine vier, den Wertscheinreihen 101 bis 104 entsprechenden Streifenlagen 119 zerschnitten wurde. Es ist angenommen, dass die Nummer 113' diesmal parallel zur Schmalseite eines Wertscheins 111 orientiert ist und man dazu parallele Bezugskanten 118' wünscht, die erst im Bündelschneidwerk 33 erzeugbar sind. Ausserdem sei angenommen, dass die Toleranzen von Streifenlage zu Streifenlage so merklich sind, dass es wünschenswert ist, den Vorschub jeder einzelnen Streifenlage 119 individuell zu steuern. Daher werden in diesem Falle in der Numeriermaschine jedem einzelnen Wertschein 111 zugeordnete Schnittmarken n auf den Zwischenstreifen zwischen benachbarten Wertscheinen 111 jeder Wertscheinreihe aufgedruckt. Diese Zwischenstreifen sind mit Z11 bis Z13, Z21 usw., Z31 usw. sowie Z41 bis Z43 bezeichnet.

Im Unterschied zu den früheren Beispielen nach den Fig. 1 bis 4 besteht die Vorschubvorrichtung 32, wie schematisch in Fig. 5 angedeutet, aus einer der Anzahl der Streifenlagen je Stapel entsprechenden Zahl von getrennten, unabhängig steuerbaren Vorschubeinrichtungen 321 bis 324, von denen jede mit ihrem zugehörigen Schieber 311 bis 314 eine der Streifenlagen 119, die den Wertscheinreihen 101 bis 104 entsprechen, individuell in Richtung F2 bewegt.

Zur Erkennung der Schnittmarken n ist vor dem Bündelschneidwerk 33 ein Lesegerätsystem 34 mit den vier individuellen Lesegeräten 341 bis 344 installiert, welche die einzelnen Streifenlagen 119 abtasten und die betreffenden Vorschubeinrichtungen 321 bis 324 individuell steuern. Der Vorschub von der ausgerichteten Anfangsposition P2 in die erste Schnittstellung, in der die Vorderränder der Streifenlagen 119 abgeschnitten werden, wird durch die Lesegeräte 341 bis 344 bei Ablesung der jeweils auf dem Vorderrand jeder Streifenlage befindlichen Schnittmarke n für jede Streifenlage getrennt gesteuert. Erst wenn alle vier Streifenlagen 119 ihre gewünschte Schnittstellung eingenommen haben, erfolgt der gleichzeitige Vorderrandbeschnitt im Bündelschneidwerk 33. Nach dem Randbeschnitt führt jede der Vorschubeinrichtungen 321 bis 324 einen fest programmierten Vorschubschritt der Länge b aus, woraufhin die vorderen Wertscheinbündel jeder Streifenlage abgeschnitten werden. Der nächste Vorschub wird wiederum von den Lesegeräten, individuell für jede Streifenlage, beim Ablesen der jeweiligen Markierung n auf den Zwischenstreifen Z11, Z21, Z31 und Z41 gesteuert, woraufhin diese Streifenlagen gemeinsam abgeschnitten werden. Diesem Schritt schliesst sich wieder ein fest programmierter Vorschubschritt der Länge b an, usw. Alle gemeinsamen Schnitte erfolgen natürlich erst dann, wenn alle Streifenlagen ihre individuellen Vorschubschritte zurückgelegt haben und in ihrer gewünschten Schnittstellung zum Stillstand gekommen sind. Auf diese Weise erhält man Wertscheine, bei denen sowohl der kritische Abstand c' als auch das Wertscheinformat konstant sind.

Die vorstehend beschriebene Verarbeitung von Wertscheinbogen unter Zuhilfenahme von Zwischenschnitten setzt im allgemeinen voraus, dass die anfallenden Abfallstreifen wenigstens 2 mm breit sind, um einwandfreie Schnitte zu gewährleisten.

Natürlich kann die Vorschubsteuerung beim Bündelschnitt als Funktion von Schnittmarken n auch für alle Streifenlagen gemeinsam durch eine einzige Vorschubvorrichtung und mit nur einem Lesegerät zur Ablesung der lediglich auf einer Wertscheinreihe aufgedruckten Schnittmarken n erfolgen, wenn Toleranzen von Streifenlage zu Streifenlage keine Rolle spielen.

Die Erfindung ist nicht auf die beschriebenen Ausführungsbeispiele beschränkt, sondern lässt mannigfache Varianten zu. So können, wenn der Seitenrand 117 der Bogen wie im Beispiel nach Fig. 4 keine Schnittmarken zur Vorschubsteuerung beim Streifenschnitt aufweist, beide gegenüberliegenden Seitenränder 115 und 117 der Bogenstapel gleichzeitig auf der Schneidstrecke 24 vor Durchführung der Streifenschnitte beschnitten werden. Ferner können die zu einem Bogenstapel gehörenden Streifenlagen zeitlich nacheinander in Wertscheinbündel zerteilt werden.

## Patentansprüche

1. Verfahren zur Herstellung druckfrischer, numerierter und auf Format geschnittener Wertscheine (11), wonach Wertscheinbogen (10) mit matrizenförmig angeordneten Wertscheindrucken bedruckt, numeriert und zu Stapeln aufeinandergelegt werden und die so gebildeten Bogenstapel (S) unter schrittweisem Vorschub automatisch zunächst in Streifenlagen (19) und dann in Wertscheinbündel (38) zerschnitten werden, wobei die aufgedruckte Nummer (13) bzw. bei an mehreren Stellen eines Wertscheins aufgedruckten Nummern eine stets an der gleichen Position der Wertscheine befindliche Nummer dazu bestimmt ist, später zu Kontrollzwecken von einem Nummernlesegerät automatisch abgelesen zu werden, während der Wertschein mit einer dieser Nummer benachbarten Bezugskante (18) an einem Positionierungsanschlag anliegt, dadurch gekennzeichnet, dass die Position der die Bezugskanten aller Wertscheine bestimmenden Schnittlinien durch Schnittmarken (m) definiert wird, welche bei der Numerierung der Bogen gemeinsam mit der Nummer, im vorbestimmten konstanten Abstand von dieser Nummer, aufgebracht werden, so dass diese Schnittlinien stets den gleichen Abstand (c) zur Position der Nummer des betreffenden Wertscheins haben, und dass die Länge der Vorschubbewegungen, welche in die diesen Schnittlinien entsprechenden Schnittstellungen führen, automatisch als Funktion der von einem Lesegerät (28, 34) abgelesenen Schnittmarken gesteuert wird.

2. Verfahren nach Anspruch 1, dadurch gekennzeichnet, dass die Bezugskanten (18) beim Streifenschnitt erzeugt werden und dass die Schnittmarken (m) auf einem parallel zur Vorschubrichtung (F1) der Bogenstapel (S) beim Streifenschnitt orientierten Seitenrand (17) der Bogen (10) aufgebracht werden, welcher bei einem späteren Randbeschnitt abgeschnitten wird.

3. Verfahren nach Anspruch 1, dadurch gekennzeichnet, dass mit Zwischenschnitten gearbeitet wird und die Schnittmarken (m) auf den späteren Abfallstreifen (Z) aufgebracht werden.

4. Verfahren nach Anspruch 3, dadurch gekennzeichnet, dass die Bezugskanten (18) beim Bündelschnitt erzeugt werden.

5. Verfahren nach Anspruch 4, bei welchem alle zu ein und demselben Bogenstapel (S) gehörenden Streifenlagen (19) nebeneinanderliegend in ihrer Anfangsposition (P2) gesammelt, gemeinsam zum Bündelschneidwerk (33) vorgeschoben und dort gleichzeitig schrittweise in Wertscheinbündel (38) zerschnitten werden, dadurch gekennzeichnet, dass die Vorschublänge zum Bündelschneidwerk und die einzelnen Vorschubschritte beim Bündelschnitt für jede einzelne Streifenlage getrennt als Funktion der auf allen Streifenlagen individuell abgelesenen Schnittmarken (m) steuerbar sind.

6. Verfahren nach einem der Ansprüche 1 bis 5, dadurch gekennzeichnet, dass als Schnittmarken jeweils zwei Einzelmarkierungen (m, ms) je Schnittlinie aufgebracht werden und dass die Ablesung der in Vorschubrichtung (F1) ersten Einzelmarkierung eine Verringerung der normalen Vorschubgeschwindigkeit auf eine Schleichbewegung und die Ablesung der zweiten Einzelmarkierung den Stopp der Vorschubbewegung bewirkt.

7. Vorrichtung zur Durchführung des Verfahrens nach Anspruch 1, mit einer Numeriermaschine (21) für die Bogen (10) sowie mit Streifen- und Bündelschneidwerken (27 bzw. 33) und mit diesen Schneidwerken zugeordneten, automatisch arbeitenden Vorschubvorrichtungen (26, 32) für die Bogenstapel (S) und die Streifenlagen (19), dadurch gekennzeichnet, dass die Numeriermaschine (21) dazu eingerichtet ist, die Bezugskanten (18; 118; 118') definierende Schnittmarken (m, ms; n) aufzudrucken, und dass an demjenigen Schneidwerk, Streifenschneidwerk (27) oder Bündelschneidwerk (33), in welchem die Bezugskanten (18; 118; 118') erzeugt werden, wenigstens ein Lesegerät (28; 34) vorgesehen ist, welches auf die Schnittmarken (m, ms; n) anspricht und die Vorschubbewegungen der betreffenden Vorschubvorrichtung (26; 32) steuert.

8. Vorrichtung nach Anspruch 7, dadurch gekennzeichnet, dass an den Numerierwerken (21b) oder an den Trägern für die Numerierwerke der Numeriermaschine (21) Klischees zum Aufdruck der Schnittmarken (m, ms; n) befestigt sind.

9. Vorrichtung nach Anspruch 7 oder 8 mit einem Bündelschneidwerk, welchem alle zu ein und demselben Bogenstapel (S) gehörenden Streifenlagen (19) durch Bewegung in Längsrichtung gemeinsam zugeführt und in welchem diese Streifenlagen gleichzeitig in Wertscheinbündel (38) zerschnitten werden, dadurch gekennzeichnet, dass allen erwähnten Streifenlagen (19) je ein individuelles Lesegerät (341 bis 344) und je eine individuelle Vorschubeinrichtung (321 bis 324) zugeordnet sind, welche getrennt von den anderen steuerbar ist.

**Claims**

1. Method for the manufacture of freshly printed, numbered security papers (11) cut to format, according to which sheets (10) of security papers with security paper impressions arranged in the form of a matrix are printed, numbered and placed one on the other to form piles (S), and with a step-wise feed, the piles (S) of sheets formed in this way are cut automatically first of all into layers (19) of strips and then into bundles (38) of security papers, in which case the printed number (13) or in the case of numbers printed at several points on a security paper, a number always located at the same position of the security papers is intended to be read later for control purposes automatically by a number-reading unit, whilst the security paper bears against a positioning stop by a reference edge (18) adjacent this number, characterised in that the position of the cutting lines determining the reference edges of all security papers is defined by cutting marks (m), which are applied during numbering of the sheets together with the number, at a predetermined constant distance from this number, so that these cutting lines always have the same spacing (c) with respect to the position of the number of the respective security paper, and that the length of the feed movements, which provide guidance into the cutting positions corresponding to these cutting lines, is controlled automatically as a function of the cutting marks read by a reading unit (28, 34).

2. Method according to claim 1, characterised in that the reference edges (18) are produced when cutting strips and that the cutting marks (m) are applied to a side edge (17) of the sheets (10) arranged parallel to the feed direction (F1) of the pile of sheets (S) when cutting strips, which side edge is cut off at the time of subsequent trimming.

3. Method according to claim 1, characterised in that one works with intermediate cuts and the cutting marks (m) are applied to the subsequent waste strips (Z).

4. Method according to claim 3, characterised in that the reference edges (18) are produced when cutting bundles.

5. Method according to claim 4, in which all the layers of strips (19) belonging to one and the same pile (S) of sheets are assembled lying one beside the other in their initial positon (P2), fed jointly to the bundle-cutting unit (33) and at this point cut simultaneously in steps into bundles (38) of security papers, characterised in that the feed length to the bundles-cutting unit and the individual feed steps during the cutting of bundles for each individual layer of strips can be controlled separately as a function of the cutting marks (m) read individually on all layers of strips.

6. Method according to any one of claims 1 to 5, characterised in that as cutting marks, two individual marks (m, ms) are respectively applied per cutting line and that reading of the first individual mark in the feed direction (F1) brings about a reduction of the normal feed speed to a creeping movement and reading of the second individual mark stops the feed movement.

7. Apparatus for carrying out the method according to claim 1, with a numbering machine (21) for the sheets (10) and with strip and bundle-cutting units (27, 33) and with feed devices (26, 32) for the piles (S) of sheets and layers of strips (19) operating automatically and associated with these cutting units, characterised in that the numbering machine (21) is designed to print cutting marks (m, ms; n) defining the reference edges (18; 118; 118') and that provided on the cutting unit, namely strip-cutting unit (27) or bundle-cutting unit (33), in which the reference edges (18; 118; 118') are produced, is at least one reading unit (28; 34) which responds to the cutting marks (m, ms; n) and controls the feed movements of the respective feed device (26; 32).

8. Apparatus according to claim 1, characterised in that blocks for printing the cutting marks (m, ms; n) are attached to the numbering units (21b) or to the supports for the numbering units of the numbering machine (21).

9. Apparatus according to claim 7 or 8 with a bundle-cutting unit, to which all layers of strips (19) belonging to one and the same pile (S) of sheets are supplied jointly by moving in the longitudinal direction and in which these layers of strips are cut simultaneously into security paper bundles (37), characterised in that associated with all the afore-mentioned layers of strips (119) is an individual reading unit (341 to 344) and an individual feed device (321 to 324), which can be controlled separately from the others.

**Revendications**

1. Procédé de fabrication de papiers-valeurs (11) fraichement imprimés, numérotés et coupés au format, selon lequel des feuilles (10) de papiers-valeurs, sur lesquelles sont imprimés des papiers-valeurs arrangés en matrice, sont numérotées et déposées en piles les unes sur les autres, les piles de feuilles (S) ainsi formées, étant entraînées automatiquement pas à pas pour être d'abord découpées automatiquement en piles de bandes (19), puis en liasses (38) de papiers-valeurs, le numéro (13) imprimé, respectivement les numéros imprimés en plusieurs endroits d'un papier-valeur, étant situés toujours à la même position sur les papiers-valeurs et destinés à être lus ultérieurement automatiquement par un appareil de lecture de numéro à fin de contrôle, pendant que le papier-valeur est en butée par un côté de référence (18) proche du numéro contre une butée de positionnement, caractérisé en ce que la position des lignes de coupe déterminant les côtés de référence de tous les papiers-valeurs est définie par des marques de coupe (m) qui sont apposées en même temps que les numéros lors de la numérotation des feuilles, à une distance prédéterminée de ce numéro, de telle sorte que ces lignes de coupe sont constamment à la même distance (c) de la position du numéro du papier-valeur concerné, et que la longueur des mouvements d'avance amenant les piles aux positions de coupe correspondant à ces lignes de coupe est commandée automatiquement en fonction des marques de coupe lues par un appareil de lecture (28, 34).

2. Procédé selon la revendication 1, caractérisé en ce que les côtés de référence (18) sont formés lors de la coupe en bandes et que les marques de coupe (m) sont apposées sur un bord latéral (17) des feuilles (10) parallèle à la direction de déplacement (F1) des piles de feuilles (S) lors de la coupe en bandes, ce bord étant ensuite détaché lors d'une coupe ultérieure des bords.

3. Procédé selon la revendication 1, caractérisé en ce qu'on procède à des coupes intermédiaires et que les marques de coupe (m) sont apposées sur les bandes ultérieures de rebut (Z).

4. Procédé selon la revendication 3, caractérisé en ce que les bords de référence (18) sont formés lors de la coupe en liasses.

5. Procédé selon la revendication 4, selon lequel toutes les piles de bandes (19) appartenant à la même pile de feuilles (S) sont rassemblées l'une à côté de l'autre dans leur position initiale (P2) puis entraînées ensemble vers le dispositif de coupe en liasses (33) où elles sont coupées simultanément, pas à pas, en liasses (38) de papiers-valeurs, caractérisé en ce que la longueur de déplacement jusqu'au dispositif de coupe en liasses et chacun des pas de déplacement lors de la coupe en liasses sont commandables pour chacune des piles de bandes séparément en fonction des marques de coupe (m) lues individuellement sur toutes les piles de bandes.

6. Procédé selon l'une des revendications 1 à 5, caractérisé en ce que les marques de coupe sont constituées de deux marques (m, ms) pour chaque ligne de coupe et que la lecture de la première marque, dans le sens de déplacement (F1) provoque une diminution de la vitesse d'avance normale jusqu'à une vitesse de rampement et que la lecture de la seconde marque provoque l'arrêt de l'avance.

7. Dispositif pour la mise en oeuvre du procédé selon la revendication 1, comprenant une machine à numéroter (21) pour les feuilles (10), ainsi que des dispositifs de coupe en bande et en liasse (27 resp. 33) et des dispositifs d'avance automatique (26, 32) pour les piles de feuilles (S) et les piles de bandes (19) associés à ces dispositifs de coupe, caractérisé en ce que la machine à numéroter (21) est agencée pour imprimer les marques de coupe (m, ms; n) définissant les côtés de référence (18; 118; 118'), et en ce que dans le dispositif de coupe en bandes (27) ou dispositif de coupe en liasses (33), dans lequel les bords de référence (18; 118; 118') sont formés, il est prévu au moins un appareil de lecture (28; 34) réagissant aux marques de coupe (m, ms; n) et commandant les mouvements d'avance du dispositif d'avance concerné (26; 32).

8. Dispositif selon la revendication 7, caractérisé en ce que des clichés pour l'impression des marques de coupe (m, ms; n) sont fixés sur les numéroteurs (21b) ou sur les supports des numéroteurs de la machine à numéroter (21).

9. Dispisitif selon la revendication 7 ou 8 comprenant une unité de coupe en liasses à laquelle toutes les piles de bandes (19) appartenant à la même pile de feuilles (S) sont amenés ensemble par déplacement longitudinal et dans laquelle les piles de bandes sont découpées simultanément en liasses de papiers-valeurs (38), caractérisé en ce qu'un appareil de lecture individuel (341 à 344) et un dispositif individuel d'avance (321 à 324), commandable séparément des autres, sont attribués à chaque pile de bandes (119).

**Fig. 1**

Fig.2

**Fig. 3**

*Fig.4*

*Fig. 5*